# EUROPÄISCHE PATENTANMELDUNG

(11) **EP 1 450 037 A1**
(43) Veröffentlichungstag der Anmeldung: **25.08.2004**
(21) Anmeldenummer: 04000387.3
(22) Anmeldetag: 10.01.2004
(51) Int. Cl.: F02N 11/04, F02N 17/00, B60K 6/04, B60K 41/02

(54) **Antriebsvorrichtung für ein Kraftfahrzeug und entsprechendes Verfahren**

(30) Priorität: 31.01.2003 DE 10303822
(71) Anmelder: Volkswagen Aktiengesellschaft, 38436 Wolfsburg (DE)
(72) Erfinder: Wistrach, Michael, 38108 Braunschweig (DE); Rennert, Ingo, 38539 Müden/Aller (DE); Zawade, Torsten, 31228 Peine (DE); Pott, Ekkehard, Dr., 38518 Gifthorn (DE)

(57) **Zusammenfassung**

Es soll vom Elektromotorbetrieb auf Verbrennungsmotorbetrieb eines Kraftfahrzeugs ohne Zugkraftunterbrechung umgeschaltet werden können, wobei die Antriebsvorrichtung des Kraftfahrzeugs möglichst einfach gestaltet werden soll. Hierzu ist vorgesehen, dass ein Verbrennungsmotor (1) über eine Kupplung (3) direkt mit einer Getriebeeingangswelle (4) verbunden ist. Ein Impulsstartergenerator (6) ist direkt auf die Getriebeeingangswelle (4) montiert, so dass das Kraftfahrzeug elektrisch betrieben werden kann. Damit ein Umschalten vom Elektrobetrieb auf den Verbrennungsmotorbetrieb ohne Zugkraftunterbrechung möglich ist, ist mit dem Verbrennungsmotor (1) ein Direktstart möglich.

## Beschreibung

Die vorliegende Erfindung betrifft eine Antriebsvorrichtung für ein Kraftfahrzeug mit einer Brennkraftmaschine, einer Startereinrichtung, die an die Eingangswelle eines Getriebes direkt ankoppelbar ist, und einer Kupplungseinrichtung, deren Antriebskomponente mit der Brennkraftmaschine und deren Abtriebskomponente mit der Eingangswelle des Getriebes direkt verbindbar oder mit der Startereinrichtung direkt verbunden ist. Darüber hinaus betrifft die vorliegende Erfindung ein entsprechendes Verfahren zum Antreiben eines Kraftfahrzeugs.

Eine gattungsgemäße Antriebsvorrichtung für ein Kraftfahrzeug ist aus der deutschen Offenlegungsschrift DE 197 05 610 A1 bekannt. Dort wird eine Starter- beziehungsweise Antriebseinheit für eine Brennkraftmaschine vorgeschlagen, die bei kaltem Motor eine andere Startmethode durchführt, als bei warmem Motor. Die Antriebseinheit ist mit einem externen Starter und mit einer Startergeneratormaschine ausgerüstet. Zum Starten des Kaltmotors wird der externe Starter gemeinsam mit der Startergeneratormaschine und zum Starten des warmen Motors wird die Startergeneratormaschine allein aktiviert. Nachteilig ist hier, dass zwei Startereinheiten vorgesehen werden müssen.

Die Aufgabe der vorliegenden Erfindung besteht somit darin, eine vereinfachte Antriebsvorrichtung für ein Kraftfahrzeug und ein entsprechendes Verfahren zu finden.

Erfindungsgemäß wird diese Aufgabe durch eine Antriebsvorrichtung nach Anspruch 1 und ein Verfahren nach Anspruch 8 gelöst.

Vorteilhafte Ausführungsformen der vorliegenden Erfindung sind in den Unteransprüchen definiert.

In vorteilhafter Weise ist es mit der Erfindung möglich, ein Kraftfahrzeug mit Elektro- und Brennkraftantrieb bereitzustellen, wobei auf eine zweite Kupplung und auf einen externen Starter verzichtet werden kann. Üblicherweise wurden nämlich Impulsstartergeneratoren mit kugelgelagerten Rotoren und je einer Kupplung vor und hinter dem Rotor ausgestattet, damit der Motor beziehungsweise die Brennkraftmaschine entkuppelt und abgeschaltet werden kann, um elektrisch zu fahren oder im Segelbetrieb zu rekuperieren.

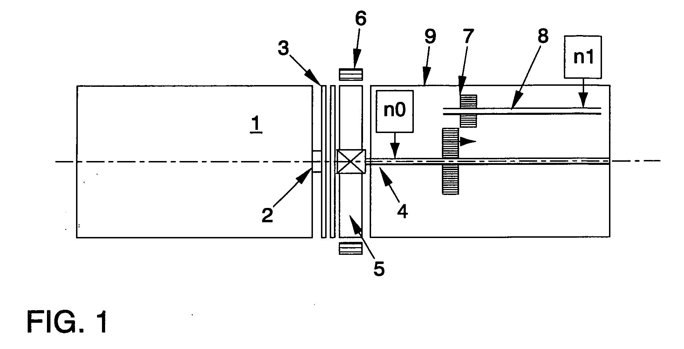

Die vorliegende Erfindung wird nun anhand der beigefügten Zeichnung näher erläutert, die eine Querschnittskizze durch eine erfindungsgemäße Antriebsvorrichtung für ein Kraftfahrzeug darstellt.

Das nachfolgende Ausführungsbeispiel stellt lediglich eine bevorzugte Ausführungsform der vorliegenden Erfindung dar.

Die Abbildung zeigt eine Brennkraftmaschine beziehungsweise einen Verbrennungsmotor 1, der über eine Kurbelwelle 2 mit einer Kupplung 3 verbunden ist. Abtriebsseitig ist die Kupplung 3 mit einer Getriebeeingangswelle 4 verbunden. Kraftschlüssig mit der Getriebeeingangswelle 4 ist der Rotor 5 eines Impulsstartergenerators 6 verbunden. Eine Getriebestufe 7 übersetzt die Drehzahl n0 der Getriebeeingangswelle 4 in eine Drehzahl n1 einer Abtriebswelle 8 eines Getriebes 9.

Im dargestellten Fall wird auf die Lagerung des Rotors 5 und auf die getriebeseitige Kupplung verzichtet. Der Rotor 5 ist mit der Getriebeeingangswelle kraftschlüssig verbunden. Die Funktion der zweiten Kupplung übernimmt in diesem Fall die Leerlaufstufe N des automatischen Getriebes 9. Die Anordnung hat den Vorteil der Bauraum- und Kosteneinsparung gegenüber einer Zweikupplungsmaschine

Es ergeben sich prinzipiell drei verschiedene Betriebsmodi: A1 Starten und Fahren mit Verbrennungsmotor, B1 Starten und Fahren mit Elektromotor und C1 Umschalten vom Elektromotorbetrieb auf Verbrennungsmotorbetrieb. Die Verfahrensschritte der Betriebsmodi stellen sich im einzelnen wie folgt dar:
A1 Starten und Fahren mit Verbrennungsmotor (Fahrzeuggeschwindigkeit Null oder nahe Null):
   - Kupplung 3 geschlossen,
   - Stellung N des Getriebes 9,
   - der Rotor startet den Verbrennungsmotor 1,
   - die Kupplung wird geöffnet
   - der Rotor 5 wird bis Stillstand abgebremst (nur bei unsynchronisierten Getrieben)
   - die Fahrstufe wird eingelegt, die rotatorische Trägheit des Rotors sorgt über die Synchronisation für ein erstes Moment im Abtrieb (nur bei synchronisierten Getrieben)
   - die Kupplung 3 wird geschlossen, das Abtriebsmoment wird über den Momenteintrag des Verbrennungsmotors 1 verstärkt
   - das Fahrzeug fährt mit Verbrennungsmotor 1, gegebenenfalls unterstützt durch E-Maschine 6
   - optional Generatorbetrieb.
B1 Starten und Fahren mit Elektromotor beziehungsweise Startergenerator:
   - Kupplung 3 geöffnet,
   - Fahrstufe eingelegt,
   - der Startergenerator 6 (SG) übernimmt den Vortrieb,
   - der elektrische Energiespeicher entlädt sich
   - der Verbrennungsmotor 1 ist abgeschaltet.
C1 Umschalten vom Elektromotorantrieb auf Verbrennungsmotorantrieb (Wiederstart bei V_{Fzg} >> 0):
   - das Fahrzeug fährt rein elektrisch, der Verbrennungsmotor 1 befindet sich im Stillstand
   - die Kupplung 3 ist geöffnet
   - Neutralstellung wird eingelegt
   - die Kupplung 3 wird geschlossen
   - der Motor 1 wird über den SG 6 gestartet
   - der Motor 1 wird auf diejenige Drehzahl beschleunigt, die zum differenzdrehzahlfreien Wiedereinlegen der gewünschten Fahrstufe erforderlich ist (abhängig von Fahrzeuggeschwindigkeit und Getriebeübersetzung der gewünschten Fahrstufe); damit ist momentneutrales Einkuppeln möglich
   - die gewünschte Fahrstufe wird eingelegt.

Das System ist geeignet, die Segelphase zu verlängern, indem eine geringe Menge elektrischer Energie nachgeschoben wird. Vorzugsweise wird das erfindungsgemäße Verfahren bei Fahrgeschwindigkeiten ≤ 50 km/h, ideal ≤ 35 km/h, optimal ≤ 20 km/h angewendet. Mit diesem System können auch alle weiteren Zusatzfunktionen eines Startergenerators 6 wie Stop/Start-Betrieb, Boosten und Schnellstart realisiert werden.

Falls in der Segelphase kein Vortrieb, sondern eine Verzögerung des Fahrzeugs erwünscht ist, kann rekuperiert werden, d.h. die Verzögerungsenergie der Fahrzeugmasse wird über den Antriebsstrang und den Startergenerator (vorzugsweise bei abgeschaltetem Motor) in einen elektrischen Energiespeicher transferiert. Die Entscheidung übernimmt ein Energiemanagement beziehungsweise der Fahrer mit leichter Betätigung des Bremspedals.

Die Synchronisierung des Getriebes kann der Startergenerator übernehmen, in dem er vom Wechselrichter gesteuert kurzfristig motorisch betrieben wird, um die Zahnpaarung im Getriebe auf gleiche Drehzahl zu bringen. Damit können die Synchronisiervorrichtungen im Getriebe entfallen. Bei Entfall der Synchronisiereinrichtungen wäre prinzipiell eine mechanische Bremsvorrichtung zur Bremsung der Getriebeeingangswelle erforderlich, die bei Verwendung eines Startergenerators 6 aber überflüssig ist, weil damit die Welle elektrisch abgebremst werden kann. Ferner könnte, bei Verwendung geeigneter Energiespeicher, der Rückwärtsgang entfallen, da üblicherweise die Drehrichtung der elektrischen Maschine 6 umkehrbar ist.

Ergänzend wird vorgeschlagen, den Verbrennungsmotor 1 in Segelphasen nicht vollkommen abzuschalten, sondern lastfrei mit Leerlaufdrehzahl zu betreiben. Hierbei kann auch eine besonders niedrige Leerlaufdrehzahl angestrebt werden; vorzugsweise ≤ 600/min, ideal ≤ 500/min, optimal ≤ 400/min bei 4-Zylindermotoren. Aus derart niedrigen Drehzahlen kann der Verbrennungsmotor nicht unter Last auf eine höhere Drehzahl beschleunigt werden. Er kann jedoch zunächst lastfrei auf zumindest 90% seiner üblichen Leerlaufdrehzahl, zumindest jedoch auf 700/min (bei 4-Zylinder-Motoren) beschleunigt werden, bevor eine Laständerung durch Kupplungseingriff erfolgt. Somit sähe ein _{"}Wiederstart" folgendermaßen aus:
C2 Umschalten vom Elektromotorbetrieb auf Verbrennungsmotorbetrieb (ohne zwischenzeitliche Abschaltung des Verbrennungsmotors):
   - das Fahrzeug fährt rein elektrisch, der Verbrennungsmotor 1 befindet sich im lastfreien Leerlaufbetrieb
   - die Kupplung 3 ist geöffnet
   - der Motor 1 wird lastfrei auf diejenige Drehzahl beschleunigt, die zum differenzdrehzahlfreien Schliessen der Kupplung 3 erforderlich ist (abhängig von Fahrzeuggeschwindigkeit und Getriebeübersetzung der gewünschten Fahrstufe); damit ist momentneutrales Einkuppeln möglich
   - die Kupplung wird geschlossen.

Diese Lösung arbeitet im Gegensatz zum Wiederstart mit Motorstillstand ohne Zugkraftunterbrechung, es ist jedoch eine kleine Verzögerung der Momentenabgabe des Verbrennungsmotors zu verzeichnen, da dieser zunächst lastfrei beschleunigt werden muss.

Bei direkteinspritzenden, vorzugsweise bei direkteinspritzenden schichtladefähigen Ottomotoren kann die vorgeschlagene Anordnung von Kupplung 3 und elektrischen Maschine 6 besonders vorteilhaft eingesetzt werden, da diese Ottomotoren auch ohne externen Starter durch den sogenannten Direktstart gestartet werden können. Dabei wird bei stehendem Motor in den um den geringsten Kurbelwinkel hinter dem oberen Totpunkt stehenden Zylinder Kraftstoff eingespritzt und gezündet. Obgleich der Kraftstoff mit schlechtem Wirkungsgrad verbrennt (niedrige Verdichtung), erfolgt eine Kurbelwellendrehung und beim nächstfolgenden Zylinder kann erneut eingespritzt werden. Vorzugsweise wird das Verfahren nur bei höheren Kühlmitteltemperaturen (z.B. > 40° C) und/oder nach einen vorgebbaren Zeitraum nach Motorenstart (z.B. 120 sec) angewendet, um hinreichend niedrige Startmomente und hohe Startsicherheit zu erreichen.

Damit werden folgende Betriebsmodi ermöglicht:
A2 Starten und Fahren mit Verbrennungsmotor vorzugsweise bei zumindest teilerwärmtem Motor (Fahrzeuggeschwindigkeit Null oder nahe Null):
   - Kupplung 3 geöffnet,
   - beliebige Fahrstufeneinstellung, z.B. 1. Gang,
   - Direktstart des Verbrennungsmotors 1
   - die Kupplung 3 wird geschlossen, ein Abtriebsmoment wird über den Momenteintrag des Verbrennungsmotors 1 erzeugt
   - das Fahrzeug fährt mit Verbrennungsmotor 1, gegebenenfalls unterstützt durch elektrische Maschine 6
   - optional Generatorbetrieb.
C3 Umschalten vom Elektromotorbetrieb auf Verbrennungsmotorbetrieb
   - das Fahrzeug fährt rein elektrisch, der Verbrennungsmotor 1 befindet sich im Stillstand
   - die Kupplung 3 ist geöffnet
   - Direktstart des Verbrennungsmotors 1
   - der Motor 1 wird lastfrei auf diejenige Drehzahl beschleunigt, die zum differenzdrehzahlfreien Schließen der Kupplung 3 erforderlich ist (abhängig von Fahrzeuggeschwindigkeit und Getriebeübersetzung der gewünschten Fahrstufe); damit ist momentneutrales Einkuppeln möglich
   - die Kupplung wird geschlossen.

### BEZUGSZEICHENLISTE

- 1: Verbrennungsmotor
- 2: Kurbelwelle
- 3: Kupplung
- 4: Getriebeeingangswelle
- 5: Rotor
- 6: Impulsstartergenerator
- 7: Getriebestufe
- 8: Abtriebswelle

## Patentansprüche

1. Antriebsvorrichtung für ein Kraftfahrzeug
- mit einer Brennkraftmaschine (1),
- einer Startereinrichtung (6), die an die Eingangswelle eines Getriebes direkt ankoppelbar ist, und
- einer Kupplungseinrichtung (3), deren Antriebskomponente mit der Brennkraftmaschine (1) und deren Abtriebskomponente mit der Eingangswelle (4) des Getriebes (9) direkt verbindbar oder mit der Startereinrichtung (6) direkt verbunden ist, **dadurch gekennzeichnet, dass** mit der Brennkraftmaschine (1) ein Direktstart durchführbar ist, so dass beim Antrieb des Kraftfahrzeugs mittels der Startereinrichtung (6) die Brennkraftmaschine (1) ohne Zugkraftunterbrechung startbar ist.

2. Antriebsvorrichtung nach Anspruch 1, wobei mit der Startereinrichtung (6) das Getriebe synchronisierbar ist.

3. Antriebsvorrichtung nach Anspruch 1 oder 2, wobei die Startereinrichtung (6) eine Generatorfunktionalität besitzt.

4. Antriebsvorrichtung nach Anspruch 3, wobei die Startereinrichtung (6) ein Impulsstartergenerator ist.

5. Antriebsvorrichtung nach einem der Ansprüche 1 bis 4, wobei das Kraftfahrzeug mit der Startereinrichtung (6) rückwärts betreibbar ist.

6. Antriebsvorrichtung nach einem der Ansprüche 1 bis 5, wobei die Brennkraftmaschine (1) bei geöffneter Kupplung (3) abgeschaltet ist.

7. Antriebsvorrichtung nach einem der Ansprüche 1 bis 6, wobei der Direktstart durch eine Kraftstoffeinspritzung in den mit dem geringsten Kurbelwinkel hinter dem oberen Zündtotpunkt stehenden Zylinder und Zündung dieses Zylinders durchführbar ist.

8. Antriebsvorrichtung nach Anspruch 7, wobei der Direktstarter bei geöffneter Kupplung (3) und Antrieb des Kraftfahrzeugs durch die Startereinrichtung (6) durchführbar ist.

9. Verfahren zum Antreiben eines Kraftfahrzeugs **gekennzeichnet durch**
- Öffnen einer Kupplung zwischen einer Brennkraftmaschine (1) und einem Antriebsstrang des Kraftfahrzeugs,
- elektrisches Antreiben des Kraftfahrzeugs **durch** eine Startereinrichtung (6),
- Direktstarten der Brennkraftmaschine (1),
- Schließen der Kupplung (3) und
- Antreiben des Kraftfahrzeugs **durch** die Brennkraftmaschine (1).

10. Verfahren nach Anspruch 9, wobei beim Öffnen der Kupplung (3) die Brennkraftmaschine (1) abgeschaltet wird.

11. Verfahren nach Anspruch 9 oder 10, wobei das direkte Starten durch Kraftstoffeinspritzung in den mit dem geringsten Kurbelwinkel hinter dem oberen Zündtotpunkt stehenden Zylinder in Verbindung mit einer sich anschließenden Zündung erfolgt.

12. Verfahren nach einem der Ansprüche 9 bis 11, wobei ein Getriebe (9) des Kraftfahrzeugs durch die Startereinrichtung (6) synchronisiert wird.

13. Verfahren nach einem der Ansprüche 9 bis 12, wobei eine Getriebeeingangswelle (4) mit der Startereinrichtung (6) gebremst wird.

14. Verfahren nach einem der Ansprüche 9 bis 13, wobei das Kraftfahrzeug mit der Startereinrichtung (6) gegebenenfalls rückwärts betrieben wird.
